# EUROPÄISCHE PATENTSCHRIFT

(11) **EP 3 513 216 B1**
(45) Veröffentlichungstag und Bekanntmachung des Hinweises auf die Patenterteilung: **15.10.2025**
(21) Anmeldenummer: 17765400.1
(22) Anmeldetag: 06.09.2017
(51) Int. Cl.: G01S 17/42, G01S 17/86, G01S 7/481, G01S 17/89, H04N 23/56

(54) **LASERSCANNER MIT LEUCHTE**
LASER SCANNER HAVING A LIGHTING UNIT
SCANNER LASER À LAMPE

(30) Priorität: 15.09.2016 DE 102016117431; 07.10.2016 DE 102016119155; 30.06.2017 DE 102017114617
(43) Veröffentlichungstag der Anmeldung: 24.07.2019
(73) Patentinhaber: Zoller & Fröhlich GmbH, 88239 Wangen im Allgäu (DE)
(72) Erfinder: FRÖHLICH, Christoph, 88239 Wangen (DE); METTENLEITER, Markus, 88316 Isny (DE)
(74) Vertreter: Winter, Brandl - Partnerschaft mbB
(86) Internationale Anmeldenummer: PCT/EP2017/072347
(87) Internationale Veröffentlichungsnummer: WO 2018/050512

(56) Entgegenhaltungen:
- EP-A1- 2 860 550
- EP-A1- 2 860 550
- EP-A1- 2 860 550
- DE-U1- 202013 001 538
- DE-U1- 202013 001 538
- DE-U1- 202013 001 538
- LEICA GEOSYSTEMS: "Leica ScanStation P40/P30 User Manual Version 2.0", 2015, pages 1 - 148, XP055840514, Retrieved from the Internet <URL:https://web.archive.org/web/20170226152445/https://surveyequipment.com/assets/index/download/id/457/> [retrieved on 20210913]
- LEICA GEOSYSTEMS: "Leica ScanStation P40/P30 User Manual Version 2.0", 2015, pages 1 - 148, XP055840514, Retrieved from the Internet <URL:https://web.archive.org/web/20170226152445/https://surveyequipment.com/assets/index/download/id/457/> [retrieved on 20210913]

## Beschreibung

Die Erfindung betrifft einen Laserscanner gemäß dem Oberbegriff des Patentanspruchs 1.

Aus der DE 10 2012 105 027 A1 ist ein Laserscanner bekannt, bei dem an einem rotierenden Drehkopf - im Folgenden als Rotor bezeichnet - eine Kamera angeordnet ist, über die Farbinformationen eines zu vermessenden Messobjektes aufgenommen werden können. Diese Farbkamera dreht mit einer Optik mit, über die ein von einem Sender abgegebener Messstrahl auf ein Messobjekt gerichtet werden kann.

Über die Farbkamera können die bei der Vermessung erforderlichen Farbinformationen ohne nennenswerte Farbverfälschung erfasst werden und den über den Laserscanner erfassten Messdaten zugeordnet werden, so dass eine 3D-Farbabbildung ermöglicht ist.

Derartige 3D-Scanner werden auch zur Vermessung von dunklen Räumen, beispielsweise Schächten verwendet. Die Erfassung der Farbinformationen über die Farbkamera ist aber aufgrund der mangelnden Beleuchtung derartiger Umgebungen schwierig. Prinzipiell könnte die Ausleuchtung über externe Leuchten erfolgen, die zum einen jedoch schwierig zu installieren sind und zum anderen keine hinreichende Ausleuchtung gewährleisten.

Eine Lösung, bei der die Ausleuchtung des Raumes über eine am Laserscannergehäuse angeordnete und somit von der Bewegung des Laserscanners mitgeführte Zusatzleuchte vorgesehen ist, zeigt die Offenlegungsschrift DE 10 2014 110 809 A1 der Anmelderin. Hierbei ist fest am Gehäuse des Laserscanners ein Leuchtenkopf mit mehreren LED-Zeilen, die etwa sphärisch angeordnet sind, befestigt. Jede Rotation des Laserscanners wird so auch von der fest angeordneten Leuchte ausgeführt. So ist eine verlässliche Ausleuchtung des Bildfeldes der Kamera gewährleistet.

Zwar ist die Ausleuchtung verlässlich, jedoch ist sie nicht immer optimal bezüglich einer Homogenität der Lichtstärke, da ein ausleuchtbares Leuchtfeld gegen das Bildfeld der Kamera verschoben sein kann.

Die Druckschrift EP 2 860 550 A1 zeigt einen gattungsgemäßen Laserscanner mit einem Rotor, der drehbar an einem Gehäuse gelagert ist. Am Rotor sind eine Optik, über die ein von einem Sender abgebbarer Messstrahl auf ein Messobjekt oder ein von diesem reflektierbarer Strahl auf einen Detektor lenkbar ist, und eine Kamera zur Erfassung von Bildinformationen angeordnet. Eine Leuchteinheit aus mehreren Stroboskopblitzlichtern, sorgt für eine Ausleuchtung, indem die Stroboskoplichter konzentrisch bezüglich der Kameraoptik angeordnet sind und mitrotieren.

Die Druckschrift DE 20 2013 001 538 U1 zeigt einen Laserscanner mit einer vom Rotor entkoppelten Leuchteinheit.

Die Druckschrift Leica ScanStation P40/P30, User Manual von 2015 offenbart einen Laserscanner ohne Beleuchtung des Bildfeldes.

Dem gegenüber besteht die Aufgabe der Erfindung darin, einen Laserscanner mit homogener ausgeleuchtetem Bildfeld bereitzustellen.

Diese Aufgabe wird durch einen Laserscanner mit den Merkmalen des Patentanspruchs 1 gelöst.

Vorteilhafte Weiterbildungen der Erfindung sind Gegenstand der Unteransprüche 2 bis 12.

Ein Laserscanner hat einen Rotor, der um eine Drehachse - im Folgenden als Rotationsachse bezeichnet - an einem Gehäuse des Laserscanners gelagert ist. Das Gehäuse seinerseits ist wiederum um eine Drehachse drehbar, beispielsweise relativ zu einer Trag- oder Standvorrichtung des Laserscanners. Diese kann beispielsweise ein Befestigungsflansch sein. Dabei ist im Rotor eine Optik angeordnet, über die ein von einem Sender abgegebener Messstrahl auf ein Messobjekt, oder ein vom Messobjekt reflektierter Strahl auf einen Empfänger - im Folgenden als Detektor bezeichnet - lenkbar ist. Sender und Detektor sind vorzugsweise Komponenten des Laserscanners. Im Rotor des Laserscanners ist zudem eine Kamera zur Erfassung von Bildinformationen des Messobjektes angeordnet. Um die Bildinformationen mit ausreichender Güte erfassen zu können, hat der Laserscanner zudem eine Leuchteinheit, über die in Abhängigkeit von einer Kameraposition das Bildfeld ausgeleuchtet werden kann. Erfindungsgemäß sind mehrere Lichtaustritte, insbesondere ein Leuchtmittel der Leuchteinheit, am Rotor selbst angeordnet.

Durch die Anordnung am Rotor selbst befinden sich die Lichtaustritte in räumlich geringer Distanz zu einem Lichteintritt der Kamera, was einen möglichen Paralaxenfehler zwischen einer Beleuchtungsrichtung und einer optischen Achse der Kamera verringern kann. Zudem ist sichergestellt, dass die Beleuchtungsrichtung immer und auf vorrichtungstechnisch einfache Weise die Drehung des Rotors und damit der optischen Achse der Kamera begleitet.

In einer Weiterbildung weist der Laserscanner mehr als eine Messfrequenz, insbesondere zwei oder drei Messfrequenzen auf.

Vorzugsweise weist die Leuchteinheit als Leuchtmittel eine oder mehrere LEDs auf. Dabei können jedem Lichtaustritt eine oder mehrere LEDs zugeordnet sein. Dadurch weist die Leuchteinheit bei geringem Bauraumbedarf trotzdem eine hohe Lichtstärke auf.

Das Leuchtmittel kann im Bereich des Lichtaustritts oder in einem davon entfernten Bereich angeordnet sein. Im zweiten Fall kann das Licht des Leuchtmittels hin zum Lichtaustritt beispielsweise über einen Lichtleiter durch den Rotor hindurch geleitet sein.

Offenbarungsgemäß weist die Leuchteinheit mehrere Lichtaustritte auf, die am Rotor selbst angeordnet sind. Auf diese Weise kann beispielsweise ein größeres Bildfeld mit geringem, insbesondere eliminiertem, Paralaxenfehler ausgeleuchtet werden. Alternativ oder ergänzend kann die Verwendung mehrerer Lichtaustritte dazu dienen, die Ausleuchtung des Bildfeldes homogener und/oder fokussierter zu gestalten.

In einer bevorzugten Weiterbildung sind die Lichtaustritte derart angeordnet, dass eine Hauptbeleuchtungsrichtung, das heißt eine resultierende Beleuchtungsrichtung der mehreren Lichtaustritte, mit einer optischen Achse der Kamera zusammenfällt oder etwa zusammenfällt. Damit ist sichergestellt, dass zu jedem Abstand der Kamera vom Messobjekt das Bildfeld immer optimal ausgeleuchtet ist. Alternativ kann die Hauptbeleuchtungsrichtung parallel oder etwa parallel zur optischen Achse der Kamera ausgerichtet sein.

Die Hauptbeleuchtungseinrichtung ergibt sich dabei aus Beleuchtungsrichtungen der Lichtaustritte.

Offenbarungsgemäß sind die Beleuchtungsrichtungen der Lichtaustritte konvergent zu der optischen Achse der Kamera. Offenbarungsgemäß ist eine Entfernung eines Brennpunktes der Beleuchtungsrichtungen vom Rotor fest oder verstellbar ausgestaltet.

Um beispielsweise diese Entfernung zu verändern, ist in einer Weiterbildung wenigstens eine der Beleuchtungsrichtungen gegen die optische Achse der Kamera verstellbar, insbesondere verschwenkbar. Dies kann beispielsweise über einen Servo- oder andersartigen Stellmotor erfolgen.

Vorzugsweise sind die Lichtaustritte um die optische Achse der Kamera verteilt angeordnet. Vorzugsweise sind sie gleichverteilt angeordnet. Die Verteilung um die optische Achse herum ermöglicht es, die vorbeschriebene homogene Ausleuchtung des Bildfeldes und/oder die Fokussierung auf einfache Weise zu gewährleisten.

Vorteilhaft ist es, wenn die Lichtaustritte zu der optischen Achse der Kamera jeweils den gleichen Radialabstand aufweisen. Noch homogener ist die Ausleuchtung, wenn die Lichtaustritte um die optische Achse der Kamera herum in gleichem Winkelabstand angeordnet sind.

In einer Weiterbildung ist die Homogenität der Ausleuchtung verbessert, indem die Lichtaustritte zur Rotationsachse des Rotors in jeweils gleichem Abstand angeordnet sind.

Umgekehrt kann das Bildfeld, falls gewünscht, beispielsweise inhomogen ausgeleuchtet sein, wenn die Lichtaustritte unterschiedliche Abstände zur genannten Rotationsachse aufweisen.

In einer Weiterbildung sind die Lichtaustritte zu Gruppen geordnet zusammengefasst.

In einer bevorzugten Weiterbildung ist eine der Gruppen diesseits und eine andere der Gruppen jenseits einer von der optischen Achse der Kamera und der Rotationsachse des Rotors aufgespannten Ebene angeordnet. Unter der Annahme einer horizontalen Rotationsachse des Rotors ist somit eine Gruppe oberhalb und die andere unterhalb der Ebene angeordnet. Die Gruppen können dabei zur Ebene symmetrisch ausgebildet sein. Das heißt, sie können eine gleiche Anzahl von Lichtaustritten in zur Ebene symmetrischer Anordnung aufweisen.

Eine besonders homogene Ausleuchtung ist auch möglich, wenn sich in einer Weiterbildung die Gruppen konzentrisch um die optische Achse der Kamera und zueinander radial beabstandet erstrecken. In anderen Worten sind die Lichtaustritte dann um die optische Achse, auf konzentrischen Teilkreisen unterschiedlicher Radien verteilt, angeordnet.

Alternativ zu dieser kreisförmigen Anordnung können die Gruppen auch eine zeilenförmige Anordnung der Lichtaustritte aufweisen.

In einer möglichen Ausgestaltung hat der Laserscanner eine Ladebatterieanordnung mit wenigstens zwei Ladebatterien, die im Folgenden als Akkus bezeichnet sind. Diese sind beidseitig der Drehachse des Gehäuses gleich verteilt. Dabei sind sie insbesondere bezüglich ihres Massenträgheitsmomentes zur Drehachse des Gehäuses verteilt angeordnet, so dass die Drehung des Gehäuses mit geringster Unwucht erfolgen kann.

Dabei können zwei, drei oder vier oder mehrere Akkus vorgesehen sein.

Eine eingehendere Beschreibung dieser Akkus und ihrer Anordnung erfolgt in der parallelen Anmeldung der Anmelderin mit dem Aktenzeichen DE 10 2016 119 155.

In einer bevorzugten Weiterbildung hat der Laserscanner eine auf einfache Weise modular wechselbare Speichereinheit, im Folgenden als Datenspeicher bezeichnet, insbesondere ein Solid State Drive oder ein Halbleiterlaufwerk (SSD). Auf dem Datenspeicher sind zumindest die Messinformationen und/oder die Bildinformationen des Messobjektes ablegbar, insbesondere abgelegt. Das einfache, modulare Wechseln des Datenspeichers ermöglicht dabei unter anderem die Sicherung von Daten durch einfaches Entfernen des Datenspeichers aus dem Laserscanner. Dies ist beispielsweise bei Vermessungsaufgaben von Vorteil, die Bauwerke mit hohen Sicherheits- oder Geheimhaltungsanforderungen betreffen. Zu nennen sind hier beispielsweise Vermessungen innerhalb von Atomkraftwerken oder militärischen Anlagen.

In einer Weiterbildung des Laserscanners ist auf dem Datenspeicher eine den Betrieb des Laserscanners ermöglichende Betriebssoftware, insbesondere ein Betriebssystem abgelegt. Damit wird mit der Entnahme des Datenspeichers auch der Betrieb des Laserscanners verunmöglicht. Auch dies unterstützt die genannten Sicherheitsanforderungen, da der Laserscanner vor unautorisierter Nutzung geschützt ist.

Eine eingehendere Beschreibung der Aspekte des Datenspeichers erfolgt in der genannten DE 10 2016 119 155.

In einer Weiterbildung des Laserscanners sind Leuchtmittel der einzelnen Lichtaustritte zur optimalen Ausleuchtung bezüglich ihrer Leuchtrichtung und / oder Lichtstärke und / oder -farbe individuell ansteuerbar.

Ein Drehgeber oder Encoder, über den die Drehposition des Gehäuses und / oder des Rotors erfass- und in Folge insbesondere steuerbar ist, ist in einer Weiterbildung anstatt an einem Drehwerkmotor, im Folgenden als Motor eines Drehantriebes bezeichnet, an einer von diesem angetriebenen Achse angeordnet.

In einer Weiterbildung erweist es sich als vorteilhaft, wenn ein Getriebe zwischen Motor und Achse spielfrei, insbesondere als spielfreies Zahnradgetriebe, ausgebildet ist.

Ein konkretes Ausführungsbeispiel eines erfindungsgemäßen Laserscanners wird nun anhand einiger Figuren näher erläutert.

Es zeigen:
Figur 1 einen Laserscanner in einer Ansicht von vorne,
Figur 2 den Laserscanner gemäß Figur 1 mit geöffnetem Gehäuse, in einer Seitenansicht,
Figur 3 den Laserscanner gemäß Figur 2 in einer isometrischen Ansicht,
Figur 4 einen Rotor mit integrierter Optik und Lichtaustritt in einer Leuchteinheit des Laserscanners gemäß den Figuren, und
Figur 5 ein Beleuchtungsfeld der Leuchteinheit in Abhängigkeit eines horizontalen Drehwinkels (Azimutwinkel) und eines vertikalen Drehwinkels (Polarwinkel).

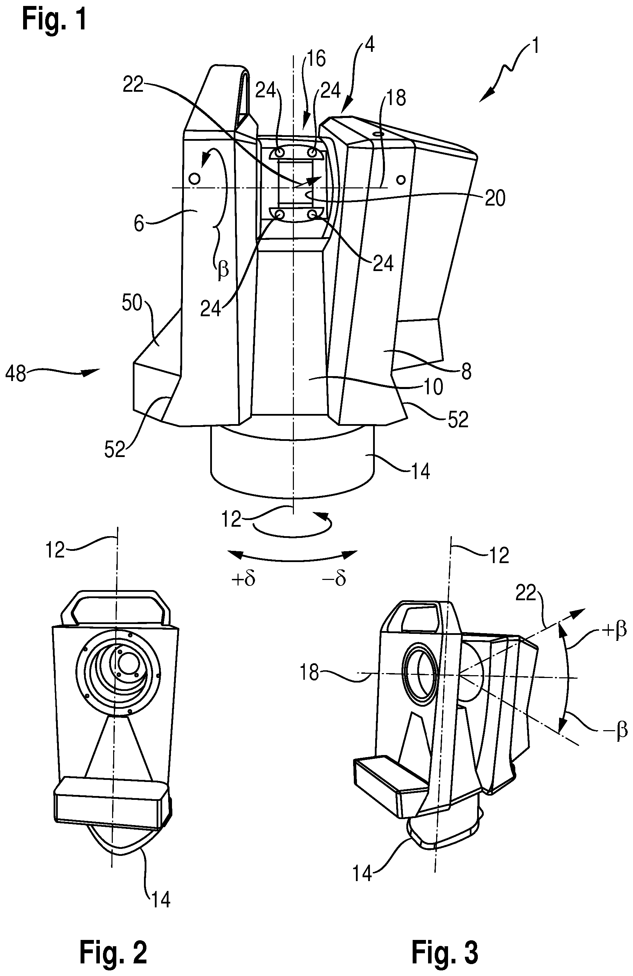

Gemäß Figur 1 hat ein Laserscanner 1 ein Gehäuse 4, das zwei etwa gleich geformte, im Wesentlichen länglich-quaderförmig ausgebildete Gehäuseteile 6 und 8 aufweist. Beide 6, 8 sind dabei über einen dritten, abgesenkten Gehäuseteil 10 - im Folgenden als Gehäusezwischenteil 10 bezeichnet - verbunden. Das Gehäuse 4 erstreckt sich mit seinen Gehäuseteilen 6, 10, 8 beidseitig und im Wesentlichen symmetrisch zu einer Vertikalebene des Laserscanners 1. In dieser ist eine Drehachse 12 angeordnet, um die das Gehäuse 4 drehbar ist. Des Weiteren hat der Laserscanner 1 einen Motor, insbesondere Elektromotor (nicht dargestellt), der im Gehäuse 4 oder in einem Fuß 14 - im Folgenden als Befestigungsflansch 14 bezeichnet - des Laserscanners 1 aufgenommen ist.

Gemäß Figur 1 hat das Gehäusezwischenteil 10 eine bezogen auf die Drehachse 12 geringere vertikale Höhe als die beiden Gehäuseteile 6 und 8, so dass zwischen den Gehäuseteilen 6 und 8 ein Joch abgesenkt ist. In diesem ist ein Rotor 16 um eine Rotationsachse 18 drehbar gelagert aufgenommen. Am Rotor 16 ist ein Einbeziehungsweise Austrittsfenster 20 einer im Rotor 16 angeordneten Kamera (nicht dargestellt) ausgebildet. Im Folgenden wird das Ein- beziehungsweise Austrittsfenster als Kamerafenster 20 bezeichnet. Das Kamerafenster 20 hat dabei eine etwa rechteckige Grundform.

Grundlegend sind folgende Rotationsbewegungen des Laserscanners 1 und des Rotors 16 möglich. Gemäß Figur 1 kann das Gehäuse 4 des Laserscanners 1 um den Befestigungsflansch 14 um die Hoch- oder Drehachse 12 mit einen Azimutwinkel δ in beide Richtungen um 360° gedreht werden. Der Rotor 16 kann wiederum relativ zum Gehäuse um die Rotationsachse 18 mit dem Höhen- oder Polarwinkel β <360° gedreht werden. In Abhängigkeit der beiden genannten Drehwinkel δ, β richtet sich die optische Achse 22 der Kamera aus. In anderen Worten: In Abhängigkeit der beiden genannten Drehwinkel δ, β ist die optische Achse 22 der Kamera ausgerichtet. In Richtung der optischen Achse 22 "blickt" die Kamera.

Gemäß Figur 1 ist das Kamerafenster 20 an seinen vier Ecken von jeweils einem Lichtaustritt 24 einer Leuchteinheit des Laserscanners 1 flankiert. Im Bereich innerhalb des Rotors 16, hinter den Lichtaustritten 24, ist jeweils eine LED oder eine LED-Anordnung angeordnet. Dabei sind die Lichtaustritte 24 in einer Ebene verteilt angeordnet, zu der von der optischen Achse 22 eine Normale ausgebildet ist. Die Lichtaustritte 24 sind jeweils mit gleichem radialem Abstand zur optischen Achse 22 positioniert. Über diese Anordnung der Lichtaustritte 24 ist sichergestellt, dass eine Hauptbeleuchtungsrichtung der Leuchteinheit - d. h. eine Resultierende aus Beleuchtungsrichtungen der Lichtaustritte 24 - mit der optischen Achse 22 zusammenfällt. So ist für nahezu jeden Abstand vom Rotor 16 eine präzise und homogene Ausleuchtung eines Bildfeldes der Kamera sichergestellt.

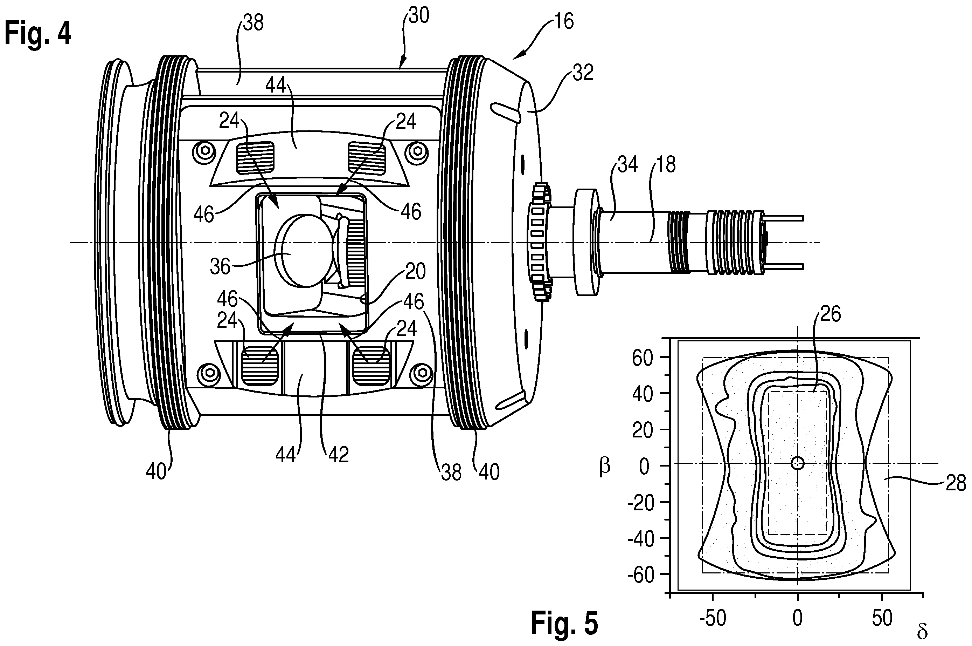

Ein Leuchtfeld 28 der Leuchteinheit und ein darin eingefasstes Bildfeld 26 der Kamera zeigt das Diagramm gemäß Figur 5. Aufgetragen sind hierin der Azimutwinkel δ, der sich um die Drehachse 12 des Gehäuses 4 bemisst, und der Polarwinkel β, der sich um die Rotationsachse 18 des Rotors 16 bemisst. Dabei ist einem Grau- oder Schraffurwert eine Lichtintensität im Leuchtfeld 28 zugeordnet. Die Lichtintensität ist innerhalb des Bildfeldes 26 homogen ausgebildet und nimmt von den Grenzen des Bildfeldes 26 nach außen hin ab.

Die Darstellung gemäß dem Diagramm zeigt die Felder 26, 28, wie sie sich in einer ruhenden Neutralposition des Gehäuses 4 und des Rotors 16 ergeben. Das Gehäuse 4 und der Rotor 16 stehen in der Neutralposition bei einem Azimutwinkel δ und einem Polarwinkel β von jeweils 0°.

Unabhängig von der Position des Gehäuses 4 und des Rotors 16, allein aufgrund der gewählten Anordnung der vier Lichtaustritte 24, erstreckt sich das Leuchtfeld 28 um die optische Achse 22 in einem Winkelintervall des Azimutwinkels δ von etwa 100° und des Polarwinkels β von etwa 120°. Das zugehörige Bildfeld 26 erstreckt sich um die optische Achse 22 in einem Winkelintervall des Azimutwinkels δ von etwa 40° und des Polarwinkels β von etwa 80°.

Bezogen auf die Neutralposition überstreicht das Leuchtfeld 28 den Azimutwinkel von δ = -50°, über δ = 0 bis hin zu δ = +50° und den Polarwinkel von β = -60°, über β = 0 bis hin zu β = +60°. Das Bildfeld 26 überstreicht dabei den Azimutwinkel von δ = -20°, über δ = 0 bis hin zu δ = +20° und den Polarwinkel von β = -40°, über β = 0 bis hin zu β = +40°.

Das erzielbare Leuchtfeld 28 ist im gezeigten Ausführungsbeispiel größer als das erzielbare Bildfeld 26. Dies ist darin begründet, dass eine Lichtstärke und deren Homogenität im Bildfeld 26 Mindestanforderungen genügen müssen. Diese sind per Definition nur in den Grenzen des Bildfeldes 26 erfüllt.

Gut zu erkennen in Figur 5 ist, dass das Bildfeld 26 nahezu rechteckig ausgebildet ist, wobei innerhalb des Bildfeldes 26 die Lichtstärke homogen ausgebildet ist. Durch die Verwendung der LEDs als Leuchtmittel der Leuchteinheit ist somit eine besonders präzise, definierte Form des Bildfeldes 26 erzielt. Diese Präzision wirkt sich positiv auf das qualitative Ergebnis der von der Kamera sammelbaren Bildinformation aus.

Außerhalb des Bildfeldes 26 fällt die Lichtintensität oder Beleuchtungsintensität bis hin zu den Grenzen des Leuchtfeldes 28 ab.

Über eine Drehung des Laserscanners 1 um die Drehachse 12 und des Rotors 16 um seine Rotationsachse 18 kann nun wunschgemäß ein dreidimensionaler Raum abgetastet und die dazugehörige Bildinformation in hoher Qualität und korrekt ausgeleuchtet gesammelt werden.

In Polarrichtung wird das vergleichsweise große Polarwinkelintervall des Leuchtfeldes 28 von etwa 120° dadurch ermöglicht, dass gemäß Figur 1 das Gehäusezwischenteil 10 des Laserscanners 1, vom Befestigungsflansch 14 hin zum Rotor 16 rampenartig ansteigt. Durch die entstehende Lücke zwischen den Gehäuseteilen 6 und 8 kann das Licht der Lichtaustritte 24 entsprechend einem Polarwinkel von etwa -60° nach unten austreten.

Eine Detailansicht des Rotors 16, isoliert vom restlichen Laserscanner 1, zeigt Figur 4. Der Rotor 16 erstreckt sich um die Drehachse 18 mit einer teilweise rotationssymmetrischen Grundform. Er hat ein Gehäuse 30, wobei an einer Stirnseite 32 des Gehäuses 30 eine Triebwelle 34 konzentrisch zur Rotationsachse 18 herausragt. Über die Triebwelle 34 ist der Rotor 16 in Drehbewegung um die Rotationsachse 18 versetzbar. Zudem weist die Triebwelle 34 an ihrem Endabschnitt Kontakte und Anschlüsse für die Energie- und Datenversorgung der im Rotor 16 angeordneten Kamera und der LEDs der Leuchteinheit auf.

Am Rotor 16 ist das Kamerafenster 20 der im Rotor 16 angeordneten Kamera (nicht dargestellt) ausgebildet. Im Rotor 16 ist zudem eine Optik 36, insbesondere ein Kameraspiegel 36 angeordnet, über die ein Messstrahl des Laserscanners 1 auf ein Messobjekt umlenkbar ist. Im gezeigten Ausführungsbeispiel ist über den gleichen Kameraspiegel 36 ein vom Messobjekt reflektierter Strahl zurück durch das Kamerafenster 20 auf einen Detektor (nicht dargestellt) des Laserscanners 1 umlenkbar.

Im gezeigten Ausführungsbeispiel werden somit sowohl der Messstrahl und der reflektierte Laserstrahl als auch die Bildinformation über das gleiche Fenster - das Kamerafenster - geführt. Alternativ dazu kann eine Führung des Messstrahls und des reflektierten Strahls unabhängig von der Bildinformation erfolgen. Beispielsweise können in einer alternativen Ausgestaltung die Laserstrahlen (Mess- und reflektierter Strahl) anstatt über das Kamerafenster über ein gesondertes Fenster, insbesondere ein Schutzglas, geführt werden, wohingegen die Bildinformation nach wie vor über das Kamerafenster in den Rotor eintritt. Das Schutzglas und das Kamerafenster können am Rotor in diametraler oder nahezu diametraler Anordnung vorgesehen sein.

Das Kamerafenster 20 ist dabei in einer von vier umfänglich verteilt angeordneten Abflachungen 38 des Gehäuses 30 ausgebildet, die sich zwischen zwei zylinderförmigen Endabschnitten 40 des Rotors 16 befinden, und die gemeinsam einen quaderförmigen Abschnitt des Gehäuses 30 ausbilden. Die Abflachung 38 mit dem Kamerafenster 20 hat an einer jeweiligen Breitseite 42 des Kamerafensters 20 eine Ausfräsung 44, die mit Bezug zur Abflachung 38 konkav ausgebildet ist. Die jeweilige Ausfräsung 44 erstreckt sich dabei beidseitig über die Breitseite 42 hinaus. In Endbereichen der Ausfräsung 44, etwa im Bereich von Ecken des Kamerafensters 20, ist jeweils ein von einer transparenten Scheibe gebildeter Lichtaustritt 24 der Leuchteinheit angeordnet. Hinter dem Lichtaustritt 24, im Inneren des Rotors 16, ist jeweils eine der bereits erwähnten LEDs angeordnet.

Durch die konkave Form der Ausfräsung 44 und die daran angepasste Ausrichtung der Lichtaustritte 24 weisen Leuchtrichtungen 46 der Lichtaustritte 24 gemäß Figur 3 jeweils hin zur optischen Achse 22 der Kamera. Dieser Umstand ist in Figur 4 etwas übertrieben mittels einzelner Pfeile dargestellt, die sich von den Lichtaustritten 24 weg erstrecken und hin zur optischen Achse 22, die die Ebenen-Normale des Kamerafensters 20 darstellt, konvergieren.

Im gezeigten Ausführungsbeispiel ist eine stufenlose Dimmung des jeweiligen Leuchtmittels des Lichtaustritts 24, insbesondere einer jeweiligen LED oder LED-Anordnung, möglich.

Auf diese Weise kann insbesondere ein Strombedarf zwischen einzelnen Bildaufnahmen der Kamera reduziert werden. Des Weiteren ist dadurch auch eine Nutzung der Leuchteinheit für Aufgaben möglich, die eine andere Lichtstärke erfordern als die, die von der fotographischen Ausleuchtung benötigt wird.

Alternativ oder ergänzend kann die Dimmung auch stufig sein.

Eine Ansteuerung der Leuchteinheit, insbesondere von deren Leuchtmittel oder LED's, erfolgt über eine interne Steuereinrichtung (nicht dargestellt) des Laserscanners 1.

Eine Energieversorgung der Leuchteinheit, der Kamera, des Senders und Detektors, sowie der Steuereinrichtung des Laserscanners 1 erfolgt gemäß Figur 1 über eine Ladebatterieanordnung 48, von der in Figur 1 lediglich einer eines zwei Akkus 50 aufweisenden Doppel-Akkus zu sehen ist.

Der gezeigte Akku 50 ist dabei an einem basisnahen Außenflankenabschnitt 52 des Gehäuseteils 6 angesetzt. Der Außenflankenabschnitt 52 wird im Folgenden als Aufnahme 52 bezeichnet. Die Aufnahme 52 ist zur Halterung des Akkus 50 nach lateral außen ausgestellt, so dass die Befestigung des Akkus 50 vereinfacht und sicherer ist. Auf diese Weise erfährt der Akku 50 eine bessere Abstützung am Gehäuseteil 6. Im gezeigten Ausführungsbeispiel sind zwei Akkus 50 vorgesehen (nur einer dargestellt). Demgemäß weist auch das Gehäuseteil 8 eine Aufnahme 52 auf.

Offenbart ist ein Laserscanner mit einem Rotor, der drehbar an einem Gehäuse des Laserscanners gehalten ist, das seinerseits um eine Drehachse drehbar ist. Im Rotor ist dabei eine Optik angeordnet, um einen von einem Sender abgegebenen Messstrahl auf ein Messobjekt oder einen von diesem reflektierten Strahl auf einen Detektor zu lenken. Zudem ist im Rotor eine Kamera zur Erfassung von Bildinformationen des Messobjekts angeordnet. Erfindungsgemäß hat der Laserscanner eine Leuchte, die am Rotor angeordnet ist, sodass in Abhängigkeit von einer Kameraposition ein Bildfeld, dessen Bildinformationen von der Kamera zu erfassen ist, ohne Paralaxenfehler oder nahezu ohne Paralaxenfehler ausgeleuchtet ist.

### Bezugszeichenliste:

- 1: Laserscanner
- 4: Gehäuse
- 6, 8: Gehäuseteil
- 10: Gehäusezwischenteil
- 12: Drehachse Gehäuse
- 14: Befestigungsflansch
- 16: Rotor
- 18: Rotationsachse Rotor
- 20: Kamerafenster
- 22: optische Achse Kamera
- 24: Lichtaustritt
- 26: Bildfeld
- 28: Leuchtfeld
- 30: Gehäuse
- 32: Stirnseite
- 34: Triebwelle
- 36: Kameraspiegel
- 38: Abflachung
- 40: Endabschnitt
- 42: Breitseite
- 44: Ausfräsung
- 46: Leuchtrichtung
- 48: Ladebatterieanordnung
- 50: Akku
- 52: Aufnahme

- δ: Azimutwinkel
- β: Polarwinkel

## Patentansprüche

1. Laserscanner mit einem Rotor (16), der drehbar an einem Gehäuse (4) gelagert ist, das seinerseits um eine Drehachse (12) drehbar ist, wobei im Rotor (16) eine Optik angeordnet ist, über die ein von einem Sender abgegebener Messstrahl auf ein Messobjekt oder ein von diesem reflektierter Strahl auf einen Detektor lenkbar ist, wobei am Rotor (16) eine Kamera zur Erfassung von Bildinformationen des Messobjekts angeordnet ist, und mit einer Leuchteinheit (24), über die in Abhängigkeit von einer Kameraposition ein Bildfeld (26) ausleuchtbar ist, **dadurch gekennzeichnet, dass** mehrere Lichtaustritte (24) der Leuchteinheit am Rotor (16) selbst angeordnet sind und Beleuchtungsrichtungen (46) der Lichtaustritte (24) konvergent zu einer optischen Achse (22) der Kamera sind, wobei eine Entfernung eines Brennpunktes der Beleuchtungsrichtungen (46) vom Rotor (16) fest oder verstellbar ausgestaltet ist.

2. Laserscanner nach Anspruch 1, wobei eine Hauptbeleuchtungsrichtung der Lichtaustritte (24) mit einer optischen Achse (22) der Kamera zusammenfällt und / oder parallel zur optischen Achse (22) der Kamera ist.

3. Laserscanner nach einem der vorhergehenden Ansprüche, wobei wenigstens eine Beleuchtungsrichtung der Lichtaustritte gegen eine optische Achse der Kamera verstellbar, insbesondere verschwenkbar, ist.

4. Laserscanner nach einem der vorhergehenden Ansprüche, wobei die Beleuchtungsrichtungen der Lichtaustritte auf das Bildfeld fokussierbar sind.

5. Laserscanner nach einem der vorhergehenden Ansprüche, wobei die Lichtaustritte (24) um eine optische Achse (22) der Kamera verteilt, insbesondere gleichverteilt, angeordnet sind.

6. Laserscanner nach einem der vorhergehenden Ansprüche, wobei die Lichtaustritte (24) zu einer optischen Achse (22) der Kamera den gleichen Radialabstand aufweisen, und / oder wobei die Lichtaustritte um eine optische Achse der Kamera den gleichen Winkelabstand aufweisen.

7. Laserscanner nach einem der vorhergehenden Ansprüche, wobei die Lichtaustritte (24) zur Rotationsachse (18) des Rotors (16) den jeweils gleichen Abstand aufweisen.

8. Laserscanner nach einem der vorhergehenden Ansprüche, wobei die Lichtaustritte (24) zu Gruppen geordnet sind.

9. Laserscanner nach Anspruch 8, wobei eine der Gruppen diesseits und eine andere der Gruppen jenseits einer von einer optischen Achse (22) der Kamera und der Rotationsachse (18) des Rotors (16) aufgespannten Ebene angeordnet ist.

10. Laserscanner nach Anspruch 9, wobei die Gruppen zur Ebene symmetrisch sind.

11. Laserscanner nach einem der Ansprüche 8 bis 10, wobei sich die Gruppen zumindest abschnittsweise konzentrisch um eine optische Achse der Kamera und zueinander radial beabstandet erstrecken.

12. Laserscanner nach einem der Ansprüche 8 bis 10, wobei sich die Gruppen zumindest abschnittsweise in Zeilen erstrecken.

## Claims

1. A laser scanner having a rotor (16) which is rotatably mounted on a housing (4) which in turn is rotatable about a pivot axis (12), wherein an optical system is arranged in the rotor (16), via which a measuring beam which is emitted by an emitter can be directed onto a measuring object or a beam which is reflected by the latter can be directed onto a detector, wherein a camera for detecting image information of the measuring object is arranged on the rotor (16), and having a light unit (24) via which an image field (26) can be illuminated as a function of a camera position, **characterized in that** a plurality light outputs (24) of the light unit are arranged on the rotor (16) itself, and illumination directions (46) of the light outputs (24) are convergent to an optical axis (22) of the camera, wherein a distance between a focal point of the illumination directions (46) and the rotor (16) is fixed or adjustable.

2. The laser scanner according to claim 1, wherein a main illumination direction of the light outputs (24) coincides with an optical axis (22) of the camera and/or is parallel to the optical axis (22) of the camera.

3. The laser scanner according to one of the preceding claims, wherein at least one illumination direction of the light outputs is adjustable, in particular pivotable, against an optical axis of the camera.

4. The laser scanner according to one of the preceding claims, wherein the illumination directions of the light outputs can be focused on the image field.

5. The laser scanner according to one of the preceding claims, wherein the light outputs (24) are distributed, in particular uniformly distributed, around an optical axis (22) of the camera.

6. The laser scanner according to one of the preceding claims, wherein the light outputs (24) have the same radial distance towards an optical axis (22) of the camera, and/or wherein the light outputs have the same angular distance around an optical axis of the camera.

7. The laser scanner according to one of the preceding claims, wherein the light outputs (24) each have the same distance to the axis of rotation (18) of the rotor (16).

8. The laser scanner according to one of the preceding claims, wherein the light outputs (24) are arranged in groups.

9. The laser scanner according to claim 8, wherein one of the groups is arranged on this side and another one of the groups is arranged on the other side of a plane spanned by an optical axis (22) of the camera and the axis of rotation (18) of the rotor (16).

10. The laser scanner according to claim 9, wherein the groups are symmetrical to the plane.

11. The laser scanner according to one of claims 8 to 10, wherein the groups extend at least in sections concentrically around an optical axis of the camera and are radially spaced from each other.

12. The laser scanner according to one of claims 8 to 10, wherein the groups extend linearly at least in sections.

## Revendications

1. Scanner laser avec un rotor (16) qui est monté de manière rotative sur un boîtier (4) qui, à son tour, peut tourner autour d'un axe de rotation (12), dans lequel une optique est disposée dans le rotor (16), par l'intermédiaire de laquelle un faisceau de mesure émis par un émetteur peut être dirigé vers un objet de mesure ou un faisceau réfléchi par celui-ci peut être dirigé vers un détecteur, dans lequel une caméra est disposée sur le rotor (16) pour enregistrer des informations d'image de l'objet de mesure, et avec une unité d'éclairage (24) par l'intermédiaire de laquelle un champ d'image (26) peut être éclairé en fonction d'une position de caméra, **caractérisé en ce que** plusieurs sorties de lumière (24) de l'unité d'éclairage sont disposées sur le rotor (16) même et des directions d'éclairage (46) des sorties de lumière (24) sont convergentes vers un axe optique (22) de la caméra, dans lequel un éloignement d'un foyer des directions d'éclairage (46) par rapport au rotor (16) est fixe ou réglable.

2. Scanner laser selon la revendication 1, dans lequel une direction d'éclairage principale des sorties de lumière (24) coïncide avec un axe optique (22) de la caméra et/ou est parallèle à l'axe optique (22) de la caméra.

3. Scanner laser selon l'une quelconque des revendications précédentes, dans lequel au moins une direction d'éclairage des sorties de lumière est réglable, en particulier de manière pivotante, par rapport à un axe optique de la caméra.

4. Scanner laser selon l'une quelconque des revendications précédentes, dans lequel les directions d'éclairage des sorties de lumière peuvent être focalisées sur le champ d'image.

5. Scanner laser selon l'une quelconque des revendications précédentes, dans lequel les sorties de lumière (24) sont réparties autour d'un axe optique (22) de la caméra, en particulier de manière uniforme.

6. Scanner laser selon l'une quelconque des revendications précédentes, dans lequel les sorties de lumière (24) présentent la même distance radiale par rapport à un axe optique (22) de la caméra, et/ou dans lequel les sorties de lumière présentent la même distance angulaire par rapport à un axe optique de la caméra.

7. Scanner laser selon l'une quelconque des revendications précédentes, dans lequel les sorties de lumière (24) présentent respectivement la même distance par rapport à l'axe de rotation (18) du rotor (16).

8. Scanner laser selon l'une quelconque des revendications précédentes, dans lequel les sorties de lumière (24) sont disposées en groupes.

9. Scanner laser selon la revendication 8, dans lequel un des groupes est disposé de ce côté et un autre des groupes est disposé de l'autre côté d'un plan défini par un axe optique (22) de la caméra et l'axe de rotation (18) du rotor (16).

10. Scanner laser selon la revendication 9, dans lequel les groupes sont symétriques par rapport au plan.

11. Scanner laser selon l'une quelconque des revendications 8 à 10, dans lequel les groupes s'étendent au moins par sections de manière concentrique autour d'un axe optique de la caméra et à distance radiale les uns des autres.

12. Scanner laser selon l'une quelconque des revendications 8 à 10, dans lequel les groupes s'étendent au moins par sections en lignes.
